Europäisches Patentamt

European Patent Office

Office européen des brevets

(11) Publication number: **0 395 082**
**A2**

(12) **EUROPEAN PATENT APPLICATION**

(21) Application number: **90108045.7**

(22) Date of filing: **27.04.90**

(51) Int. Cl.⁵: **H04N 1/21**

(30) Priority: **28.04.89 JP 107541/89**

(43) Date of publication of application:
**31.10.90 Bulletin 90/44**

(84) Designated Contracting States:
**AT BE CH DE DK ES FR GB GR IT LI NL SE**

(71) Applicant: **OMRON CORPORATION**
**10, Tsuchido-cho Hanazono Ukyo-ku**
**Kyoto 616(JP)**

(72) Inventor: **Nomaru, Haruki, c/o Omron**
**Corporation**
**Intellectual Property Center, 20, Igadera**
**Shimokaiinji, Nagaokakyo-shi, Kyoto 617(JP)**

(74) Representative: **WILHELMS, KILIAN &**
**PARTNER Patentanwälte**
**Eduard-Schmid-Strasse 2**
**D-8000 München 90(DE)**

(54) **Image storing IC card.**

㉞ Disclosed is an IC card (1) capable of being loaded in and unloaded from an image input/output device (6) such as a video camera (61), a card reader (62), etc. The IC card (1) internally incorporates an image data memory (12) for storing image data, a canned data memory (13) in which data necessary for inputting and outputting image data are stored in advance, a central processing unit (10) for controlling image data input/output, and an interface (14).

**Fig.3**

EP 0 395 082 A2

# BACKGROUND OF THE INVENTION

Field of the Invention:

This invention relates to an image storing IC card capable of image data input/output by means of an image input/output device.

The image input/output device referred to here covers an image input device, an image output device and a device capable of both input and output of image data.

Description of the Related Art:

In general, an image input/output device such as a video camera is utilized to store an image. Conventionally, in order to store the image data inputted by the image input/output device, use is made of an external storage device such as a video disk.

An arrangement in which an external storage device such as the video disk is used is high in cost since the device itself is an elaborate one. Another problem is insufficient reliability owing to the complicated mechanism.

# SUMMARY OF THE INVENTION

An object of the present invention is to solve the foregoing problems by providing an image storing IC card capable of storing image data.

According to the present invention, the foregoing object is attained by providing an image storing IC card comprising a card body capable of being freely loaded in and unloaded from an image input/output device, image data storing means provided within the card body for storing image data inputted from the image input/output device, canned data storing means provided within the card body and in which data necessary for image input/output are stored in advance, a central processing unit provided within the card body for controlling input/output of the image data, and an interface circuit provided within the card body for interconnecting the central processing unit and the image input/output device.

In operation, image data inputted from the image input/output device are stored on the IC card and, whenever necessary, the image data can be read out of the IC card and displayed on a display device such as a CRT.

Since the present invention is so adapted that the image data are stored in the image data storing means of the IC card that can be loaded in and unloaded from the image input/output device, mechanisms are not required, unlike the case with the conventional external storage device such as a floppy disk, and therefore the overall arrangement can be reduced in size and improved in terms of reliability.

Furthermore, owing to input/output of data by means of a single card, various settings can be made when inputting and outputting image data. As a result, the image input/output device does not require these functions. In addition, when the IC card is used as a certificate or the like requiring a photograph of a person's face, the owner of the card can be readily verified and therefore the card cannot be used illicitly by another individual. The security function of the IC card thus is improved.

Other features and advantages of the present invention will be apparent from the following description taken in conjunction with the accompanying drawings, in which like reference characters designate the same or similar parts throughout the figures thereof.

# BRIEF DESCRIPTION OF THE DRAWINGS

The drawings illustrate an embodiment of an IC card according to the present invention, in which:

Fig. 1 is a view of the front surface of the IC card;

Fig. 2 is a view of the back surface of the IC card;

Fig. 3 is a block diagram showing electrical components accommodated within the IC card;

Fig. 4 is a sectional view showing, in simplified form, the construction of a video camera serving as an image input/output device;

Fig. 5 is a perspective view of the video camera;

Fig. 6 is a sectional view taken along line VI-VI of Fig. 5;

Fig. 7 is an explanatory view for a case where image data are outputted; and

Figs. 8 and 9 are flowcharts showing IC card operation.

# DESCRIPTION OF THE PREFERRED EMBODIMENT

An embodiment of the present invention will now be described in detail with reference to the drawings.

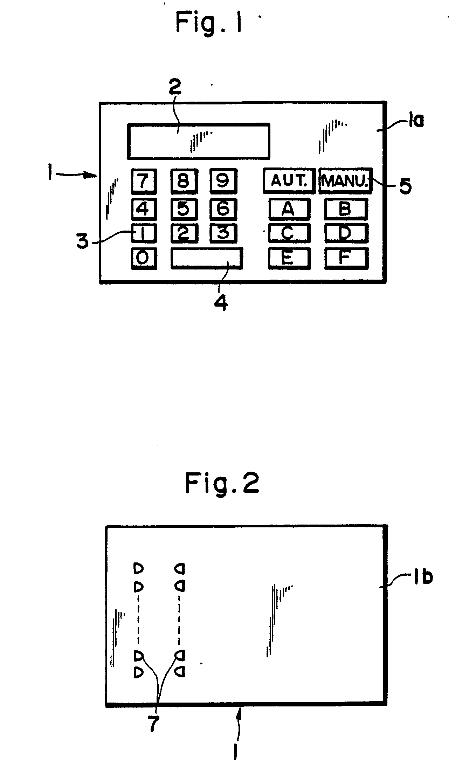

As shown in Figs. 1 and 2, an IC card 1 embodying the invention has a front surface serving as an operating surface 1a, and a back surface serving as a contact surface 1b.

The operating surface 1a of the IC card 1 is provided with a display section 2 comprising a liquid crystal panel, numeric keys 3, a return key 4, and a group of function keys 5. The IC card 1 is so arranged that the keys can be operated and the display section 2 seen even when the card is set in an image input/output device 6, described below.

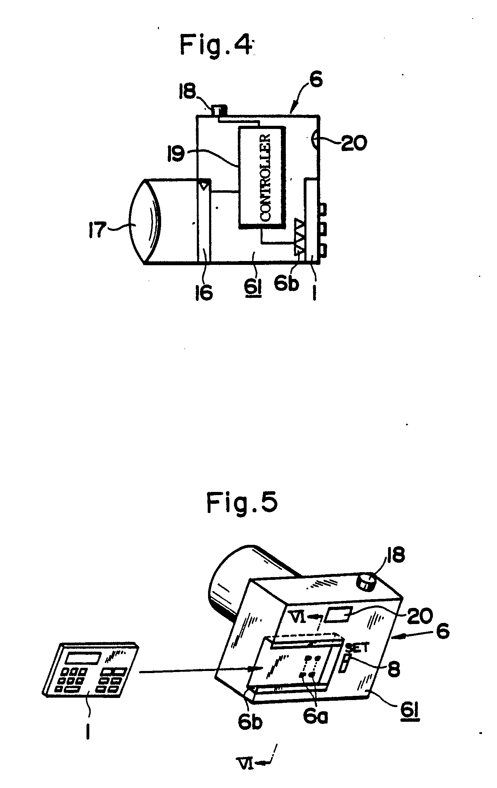

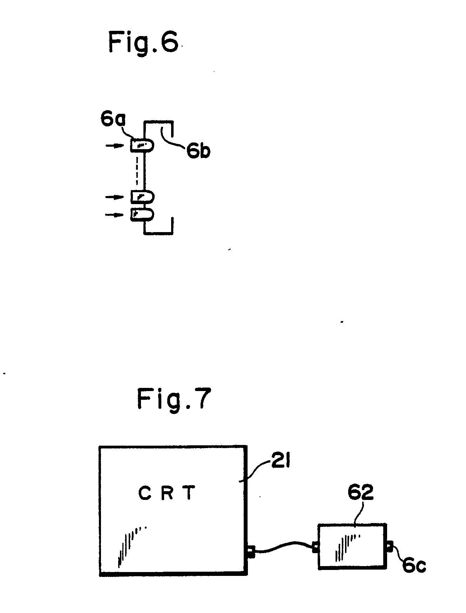

The contact surface 1b of the IC card 1 is provided with a group of contacts 7 which are electrically connected to a group of contacts 6a of the image input/output device 6 when the IC card 1 is loaded in a recess 6b of the image input/output device 6(see Fig. 5). The contacts 6a of the image input/output device 6 are recessed when the IC card 1 is loaded. When a setting switch 8 is thrown in a setting direction after the IC card 8 has been loaded, the contacts 6a project to make contact with the contacts 7 of the IC card 1, as shown in Fig. 6.

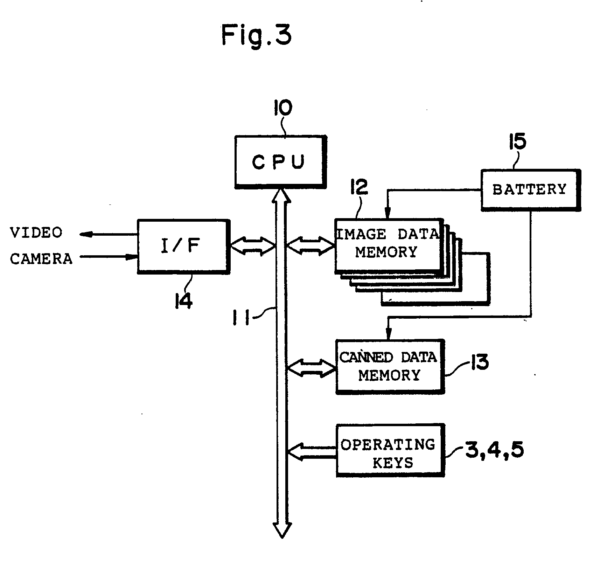

Fig. 3 is a block diagram showing an electric circuit (an IC) provided within the IC card 1. The circuit comprises a central processing unit (CPU) 10, an image data memory 12 connected to the CPU 10 by a bus 11, a canned data memory 13 similarly connected to the CPU 10 and already storing constants, such as photographic modes, necessary for controlling the image input/output device 6, an interface circuit 14 connecting the image input/output device 6 to the CPU 10, and a battery 15 for back-up purposes. The arrangement is such that data inputted from the keys 3, 4, 5 provided on the operating surface 1a of the card also can be sent to the CPU 10 via the bus 11.

The image input/output device 6, in which the IC card 1 is loaded to receive an image input, includes a video camera 61 and a card reader 62.

As shown in Fig. 4, the video camera 61 internally accommodates a CCD sensor 16 and is so adapted that an image to be stored is imaged on the CCD sensor 16 through a lens 17.

The image formed on the CCD sensor 16 is converted into an electric signal and fed into a controller 19 whenever a shutter button 18 provided on the upper portion of the video camera 61 is pressed. The electric signal is delivered from the controller 19 to the IC card 1, where the signal is stored in the image data memory 12 of the IC card. As shown in Fig. 7, image data stored in the IC card 1 can be read out by the card reader 62 and displayed on an image display device 21, such as a CRT.

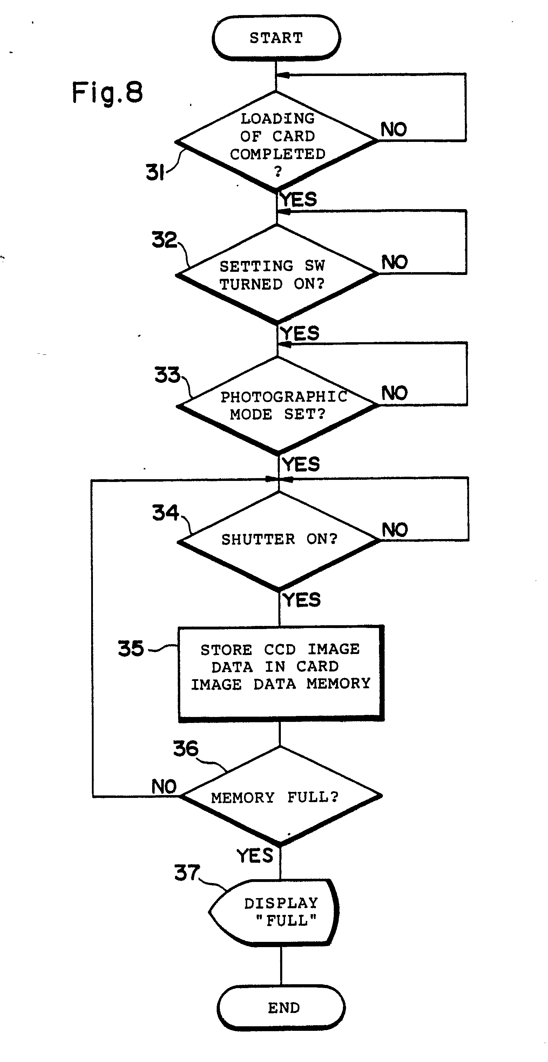

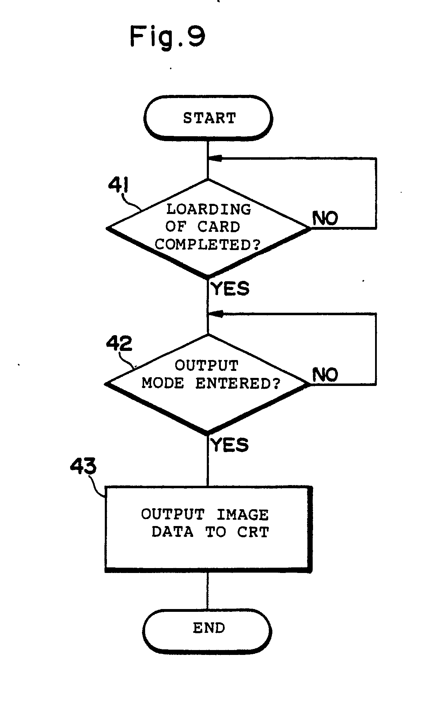

The foregoing operation will now be described with reference to the flowcharts shown in Figs. 8 and 9.

First, with regard to input of image data, a step 31 in the flowchart of Fig. 8 calls for the IC card 1 to be inserted into the card loading section (recess) 6b of the video camera 61, as shown in Fig. 5, and step 32 calls for the setting switch 8 to be placed on the set side. Next, the program proceeds to step 33. Here, when data necessary for photography are inputted from the operating surface 1a of the IC card 1, the photographic mode is set based on the inputted data.

Since detailed data necessary for photography has already been stored in the canned data memory 13 within the IC card 1, it will suffice to press one of the function keys 5 in the operation of step 33.

If the input of data necessary for photography is completed at step 33, the program proceeds to step 34, at which the shutter button 18 is pressed while using a viewfinder 20 of the video camera 61 to set the composition of the image to be introduced. As a result, the electric signal representing the image formed on the CCD sensor 16 in the video camera 61 is fed into the controller 19, after which the signal is transferred to the IC card 1 via the contacts 6a.

The IC card 1 accepts the transferred image data from the interface circuit 14 and stores this image data in the image data memory 12. When one frame of the image data has been stored in the image data memory 12, the program proceeds to step 36, at which it is determined whether the image data memory 12 is filled to capacity. If there is still capacity available, the program returns to step 34 to establish a state enabling input of the next item of image data.

Thus, entry of image data is possible until the image data memory 12 is filled to capacity. When this occurs and image data can no longer be entered, the program proceeds to step 37, at which the message "FULL" is displayed on the display section 2.

In a case where image data stored in the IC card are outputted, the IC card 1, which has been extracted from the video camera 61, is inserted into a card insertion slot 6c of the card reader 62 shown in Fig. 7, thereby loading the IC card in the card reader.

When it has been determined at step 41 of the flowchart shown in Fig. 9 that loading of the IC card 1 has been completed, an image data output mode key (not shown) is pressed at step 42, whereupon the image data is converted into a video signal and outputted to the display device 21 at step 43. Thus, the image data can be viewed as an image on the display device 21.

The IC card of the invention having an artificial intelligence (AI) function and capable of storing image data can be applied effectively to various certificates requiring a photograph of a person's face, such as an identification card, driver's license or passport.

As many apparently widely different embodiments of the present invention can be made without departing from the spirit and scope thereof, it is to be understood that the invention is not limited to the specific embodiments thereof except as defined in the appended claims.

## Claims

An image storing IC card comprising:
a card body capable of being freely loaded in and unloaded from an image input/output device;
image data storing means provided within said card body for storing image data inputted from the image input/output device;
canned data storing means provided within said card body and in which data necessary for image input/output are stored in advance;
a central processing unit provided within said card body for controlling input/output of the image data; and
an interface circuit provided within said card body for interconnecting said central processing unit and the image input/output device.

# Fig. 1

# Fig. 2

# Fig.3

# Fig.4

18   6

19   CONTROLLER   20

17

16   61   6b   I

# Fig.5

18

VI   20   6

SET   8

6b   6a   61

I

VI

# Fig.6

# Fig.7

EP 0 395 082 A2

**Fig.8**

```
        ┌─────────────┐
        │    START    │
        └──────┬──────┘
               │
          ╱────┴────╲
31      ╱  LOADING   ╲    NO
       ╱   OF CARD    ╲──────┐
       ╲  COMPLETED   ╱      │
        ╲     ?      ╱       │
          ╲────┬────╱        │
            YES│             │
               │             │
          ╱────┴────╲        │
32      ╱ SETTING SW ╲  NO   │
       ╱ TURNED ON?   ╲──────┤
       ╲             ╱       │
          ╲────┬────╱        │
            YES│             │
               │             │
          ╱────┴────╲        │
33      ╱PHOTOGRAPHIC╲  NO   │
       ╱ MODE SET?    ╲──────┤
       ╲             ╱       │
          ╲────┬────╱        │
            YES│             │
               │             │
          ╱────┴────╲        │
34      ╱             ╲  NO  │
       ╱  SHUTTER ON?  ╲─────┤
       ╲              ╱      │
          ╲────┬─────╱       │
            YES│             │
               │             │
        ┌──────┴──────┐      │
35      │ STORE CCD   │      │
        │ IMAGE DATA  │      │
        │ IN CARD     │      │
        │ IMAGE DATA  │      │
        │ MEMORY      │      │
        └──────┬──────┘      │
               │             │
          ╱────┴────╲        │
36  NO  ╱            ╲       │
   ┌────╲ MEMORY FULL?╱      │
   │     ╲           ╱       │
   │       ╲────┬───╱        │
   │        YES │            │
   └────────────┼────────────┘
                │
        ┌───────┴──────┐
37      │   DISPLAY    │
        │   "FULL"     │
        └───────┬──────┘
                │
        ┌───────┴──────┐
        │     END      │
        └──────────────┘
```

# Fig.9

```
        ┌─────────────┐
        │    START    │
        └──────┬──────┘
               │
               │◄──────────────────┐
               ▼                    │
41          ╱     ╲                 │
         ╱ LOADING  ╲    NO         │
        ╱  OF CARD    ╲────────────┘
        ╲  COMPLETED? ╱
         ╲           ╱
            ╲  YES ╱
               │
               │◄──────────────────┐
               ▼                    │
42          ╱     ╲                 │
         ╱  OUTPUT  ╲    NO         │
        ╱ MODE ENTERED?╲───────────┘
        ╲           ╱
            ╲  YES ╱
               │
               ▼
43   ┌──────────────────┐
     │   OUTPUT IMAGE    │
     │   DATA TO CRT     │
     └────────┬─────────┘
              │
        ┌─────▼──────┐
        │    END     │
        └────────────┘
```